(19) Europäisches Patentamt
European Patent Office
Office européen des brevets

(11) **EP 3 485 238 B1**

(12) **FASCICULE DE BREVET EUROPEEN**

(45) Date de publication et mention de la délivrance du brevet:
**26.02.2020 Bulletin 2020/09**

(21) Numéro de dépôt: **17825145.0**

(22) Date de dépôt: **08.12.2017**

(51) Int Cl.:
*G01F 23/24* $^{(2006.01)}$    *B64G 1/40* $^{(2006.01)}$

(86) Numéro de dépôt international:
**PCT/EP2017/082033**

(87) Numéro de publication internationale:
**WO 2018/104521 (14.06.2018 Gazette 2018/24)**

(54) **PROCÉDÉ DE JAUGEAGE THERMIQUE DU RÉSERVOIR D'UN VÉHICULE SPATIAL ET VÉHICULE SPATIAL ÉQUIPÉ DE MOYENS POUR LA MISE EN OEUVRE D'UN TEL PROCÉDÉ**

VERFAHREN ZUR THERMISCHEN MESSUNG DES TANKS EINES RAUMFAHRZEUGES UND RAUMFAHRZEUG MIT MITTELN ZUR DURCHFÜHRUNG SOLCH EINES VERFAHRENS

METHOD FOR THERMALLY GAUGING THE TANK OF A SPACECRAFT AND A SPACECRAFT EQUIPPED WITH MEANS FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2016 FR 1662242**

(43) Date de publication de la demande:
**22.05.2019 Bulletin 2019/21**

(73) Titulaire: **Airbus Defence and Space SAS**
**31402 Toulouse Cedex 4 (FR)**

(72) Inventeurs:
• **JALLADE, Sophie**
**31402 Toulouse Cedex 04 (FR)**
• **MONGE-CADET, Mathieu**
**31402 Toulouse cedex 04 (FR)**
• **ARNAUD, Sylvain**
**31402 Toulouse cedex 04 (FR)**
• **BUSSET, Barbara**
**31402 Toulouse Cedex 04 (FR)**

(74) Mandataire: **Ipside**
**6, Impasse Michel Labrousse**
**31100 Toulouse (FR)**

(56) Documents cités:
**EP-A1- 2 103 863        EP-A1- 2 769 918**
**FR-A1- 2 735 227        US-A- 5 209 115**
**US-A1- 2014 290 357    US-B1- 9 074 921**

• **AMBROSE J ET AL: "MODELING TO EVALUATE A SPACECRAFT PROPELLANT GAUGING SYSTEM", JOURNAL OF SPACECRAFT AND ROCKETS, AMERICAN INSTITUTE OF AERONAUTICS AND ASTRONAUTICS,REASTON,VA, US, vol. 37, no. 6, novembre 2000 (2000-11), pages 833-835, XP000976095, ISSN: 0022-4650**

**Description**

La présente invention s'inscrit dans le domaine du jaugeage des réservoirs à ergols des véhicules spatiaux, en particulier des satellites, en opération.

Plus particulièrement, la présente invention concerne un procédé pour un tel jaugeage, par localisation thermique de l'interface liquide-gaz dans le réservoir, ainsi qu'un véhicule spatial équipé de moyens pour la réalisation d'un tel jaugeage. L'invention concerne en outre un système pour le jaugeage du réservoir à ergols d'un tel véhicule spatial.

L'évaluation de la quantité d'ergols liquides restant à bord d'un satellite en opération s'avère essentielle du point de vue de la mission du satellite, en particulier en ce qui concerne les satellites de télécommunications, dont la durée de vie dépend directement de la quantité d'ergols restant, et pour lesquels cette quantité d'ergols est un des critères majeurs pris en compte pour les stratégies de remplacement et relocalisation.

Une telle évaluation s'avère également d'un intérêt particulier pour les satellites en orbite terrestre basse (LEO), pour lesquels il est nécessaire de garder une réserve d'ergols pour permettre une réentrée contrôlée dans l'atmosphère terrestre, un abaissement de l'altitude pour rentrer en 25 ans, ou encore une remontée d'orbite pour libérer les orbites LEO, de sorte à être en conformité avec les mesures de réduction des débris spatiaux ; ou encore pour les satellites en mission interplanétaire, pour lesquels des tirs de forte poussée, typiquement plus de 400 N, sont nécessaires tout au long de la mission, et pour lesquels il est intéressant de connaître la quantité d'ergols restant dans le réservoir pour optimiser cette mission.

Des méthodes couramment utilisées pour déterminer la quantité d'ergols liquides restant dans le réservoir d'un satellite en opération sont le comptage des ergols dépensés par chaque propulseur (« Dead Reckoning »), ou encore la méthode dite PVT, pour « Pression, Volume, Température ». La précision et la fiabilité de ces méthodes ne sont cependant pas satisfaisantes. En particulier, la méthode de comptage des ergols dépensés perd en fiabilité en même temps que la quantité d'ergols liquides dans le réservoir diminue, c'est-à-dire au moment même où l'évaluation de la quantité restante devient la plus cruciale.

Il a également été proposé par l'art antérieur de réaliser la détermination du volume d'ergols liquides contenu dans le réservoir d'un satellite par une méthode thermique, la méthode dite TPGT (pour l'anglais « Thermal Propellant Gauging Technique »). Cette méthode consiste à calculer l'inertie d'un réservoir et de son contenu par chauffage, et d'en déduire la masse contenue dans le réservoir. Elle ne peut cependant s'appliquer que lorsque la quantité d'ergols dans le réservoir est peu importante. En outre, elle est contraignante à mettre en œuvre, et elle nécessite des opérations de calibration contraignantes en amont de la mission.

Il a autrement été proposé par l'art antérieur de tirer parti, pour évaluer la quantité d'ergols liquides contenus dans le réservoir d'un satellite en environnement de gravité zéro, du fait que l'inertie thermique de la paroi d'un réservoir thermiquement conducteur est différente selon que cette paroi se trouve en contact ou non avec le liquide contenu à l'intérieur du réservoir. Un tel art antérieur, illustré notamment par les documents US 5,209,115 et US 2009/0234596 / EP 2 103 863, propose ainsi de placer un organe de chauffage et un capteur de température sur la surface externe de la paroi du réservoir, et de déterminer, en régime statique dans un environnement de gravité zéro, la vitesse de montée en température relevée par le capteur sous l'effet d'un chauffage par l'organe de chauffage. La vitesse ainsi mesurée est comparée à des abaques préétablis, qui permettent d'en déduire une masse correspondante d'ergols liquides contenue dans le réservoir. Le document US 5,209,115 propose autrement, à titre d'alternative, de comparer les vitesses de montée en température obtenues pour deux capteurs de température différents, dont l'un est situé dans une zone où le réservoir peut contenir du liquide, et l'autre dans une zone où il n'en contient pas.

De telles méthodes d'estimation sont cependant complexes à mettre en œuvre, notamment car elles nécessitent des opérations de calibration préalables pour chaque géométrie de réservoir donnée. Elles sont en outre peu précises, et nécessitent, pour augmenter leur précision, de mettre en oeuvre des réservoirs et/ou des dispositifs de mesure comprenant une pluralité d'organes de chauffage et de capteurs de température, de configuration complexe.

La présente invention vise à remédier aux inconvénients des procédés d'évaluation de la quantité d'ergols liquides présente dans le réservoir d'un satellite en opération proposés par l'art antérieur, notamment aux inconvénients exposés ci-avant, en proposant un procédé qui permette de réaliser une telle évaluation facilement et de manière précise, au moyen d'un dispositif simple, pouvant qui plus est s'adapter aisément à tout type de réservoir, ce procédé ne nécessitant en outre pas d'opérations lourdes de calibration préalable.

A cet effet, il est proposé par les présents inventeurs de tirer parti, comme proposé par l'art antérieur, de la différence importante d'inertie thermique de la paroi du réservoir selon qu'elle est en contact avec du liquide ou avec du gaz. Cependant, il est proposé par les présents inventeurs non pas de se placer pour cela en régime microgravitaire, comme il est proposé par l'art antérieur, c'est-à-dire dans une phase dans laquelle le satellite est à poste pour sa mission, et le liquide est statique dans le réservoir, réparti contre la paroi périphérique de ce dernier, mais de se placer au contraire dans une phase de forte poussée exercée par les moyens de propulsion du satellite, par exemple pendant un tir d'apogée. Au cours d'une telle phase de forte poussée, il a été constaté par les présents inventeurs que la forte accélération à laquelle est soumis le satellite génère dans son réservoir un régime pouvant être assimilé à un régime gravitaire, dans lequel les forces s'exerçant sur le liquide sous l'effet de l'accélération sont prépondérantes par rapport aux forces capillaires subies par le liquide. Dans un tel régime, que l'on désignera dans la suite de la présente description, pour plus de commodité, sous les termes de « régime gravitaire », le volume de liquide contenu dans le réservoir est concentré dans une même partie du réservoir, et il se forme dans ce dernier une interface liquide - gaz sensiblement plane et perpendiculaire à l'axe de poussée. L'art antérieur, illustré notamment par le document FR 2,735,227 A1, propose une mesure de la quantité de carburant dans un réservoir d'un engin spatial reposant sur une mesure capacitive dans un tube en communication avec le réservoir pour un engin spatial soumis à des conditions particulières d'accélération.

En outre, alors que l'art antérieur propose, dans un régime stationnaire au cours duquel il ne se produit aucun mouvement dans le réservoir, de mesurer la vitesse de montée en température de la paroi du réservoir, à partir de données relevées par un capteur de température sur une période de temps prolongée, cette vitesse étant ensuite notamment comparée à des abaques préétablis, ou encore de mesurer la température de la paroi du réservoir à l'issue d'une période de chauffage prolongée, et de la comparer à une référence, il a été découvert par les présents inventeurs qu'une évaluation fiable et précise du volume d'ergols liquides présent dans le réservoir peut être réalisée par mise en oeuvre d'une série d'acquisitions instantanées, et à une fréquence suffisamment rapide, de la température de la paroi du réservoir en un point donné de cette paroi, au cours d'une phase dans laquelle la quantité d'ergols liquides à l'intérieur du réservoir diminue rapidement. Ceci permet ainsi avantageusement de déterminer, par détection d'un changement brusque de température, l'instant auquel l'interface liquide - gaz dans le réservoir passe en ce point donné, provoquant un changement brutal de l'inertie thermique locale de la paroi du réservoir. La planéité de l'interface liquide - gaz permet alors rapidement et facilement d'associer l'instant ainsi déterminé à un volume particulier de liquide contenu dans le réservoir, et ce quelle que soit la configuration de ce dernier.

En d'autres termes, et de manière schématique, la présente invention propose de ce fait, pour réaliser le jaugeage du réservoir à ergols du véhicule spatial, de profiter d'une phase de forte accélération du véhicule spatial pour analyser la variation de température de la paroi du réservoir induite par le mouvement contrôlé du liquide à l'intérieur du réservoir. Un jaugeage très précis peut ainsi avantageusement être obtenu au moyen de matériel simple et facile à mettre en œuvre, ce que ne permet pas l'art antérieur, qui ne propose rien d'autre que d'analyser, en régime stationnaire, la variation de température de la paroi du réservoir induite par le temps de chauffage.

Ainsi, selon un premier aspect, il est proposé par la présente invention un procédé de jaugeage du réservoir à ergols liquides d'un véhicule spatial, en particulier d'un satellite, en opération, ce réservoir à ergols liquides comportant une paroi périphérique thermiquement conductrice, étant de géométrie connue et contenant un volume d'ergols liquides, et le véhicule spatial étant équipé de moyens de propulsion aptes à exercer, selon un axe de poussée donné, une forte poussée. On entend selon la présente invention, par forte poussée, une poussée permettant d'obtenir une accélération du véhicule spatial supérieure ou égale à 0,05 m/s$^2$.

Ce procédé comprend des étapes de :

-   pendant une phase de forte poussée selon l'axe de poussée exercée par les moyens de propulsion alimentés en ergols liquides depuis ledit réservoir à ergols, en particulier pendant un tir d'apogée, commande à distance du véhicule spatial dans lequel sont fixés, sur la surface externe de la paroi du réservoir, un organe de chauffage, et au moins un capteur de température dans une position connue à proximité dudit organe de chauffage. On entend, par « à proximité », le fait que le capteur de température est suffisamment proche de l'organe de chauffage pour être apte à mesurer une élévation de température de la paroi du réservoir provoquée par chauffage de cette paroi par l'organe de chauffage. Le capteur de température est en outre disposé dans un plan perpendiculaire à l'axe de poussée, dit plan d'intérêt, dans lequel l'interface liquide-gaz dans le réservoir est susceptible de passer pendant une phase de forte poussée exercée par les moyens de propulsion selon l'axe de poussée. Plus particulièrement, la commande à distance du véhicule spatial est réalisée pour la mise en œuvre d'étapes de :

    o chauffage de la paroi du réservoir par l'organe de chauffage ;
    ◦ et acquisitions de mesures de la température de la paroi du réservoir par le capteur de température, à une fréquence d'acquisition d'une mesure toutes les 30 secondes ou moins, de préférence d'une mesure toutes les 10 secondes ou moins ;

-   détermination de l'instant I où la température mesurée par le capteur de température change, correspondant à l'instant où se produit une rupture de pente sur une courbe numérique représentant la température relevée par le capteur de température en fonction du temps, un tel changement étant indicatif de la présence dans le plan d'intérêt de l'interface liquide-gaz située dans le réservoir ;

-   et détermination, à partir des données de géométrie du réservoir et de la position connue du capteur de température sur la paroi du réservoir, du volume d'ergols liquides présent dans le réservoir à l'instant I.

A partir de ce volume, il peut être facilement déterminé la masse d'ergols liquides correspondante, selon un calcul classique en lui-même pour l'homme du métier, mettant en jeu la masse volumique connue du liquide.

Le procédé selon l'invention permet ainsi de réaliser la détermination précise de la quantité d'ergols liquides contenue dans le réservoir du véhicule spatial par détermination de l'instant exact auquel l'interface liquide - gaz se trouve à une hauteur donnée dans le réservoir pendant une phase de forte accélération générant un régime gravitaire dans le réservoir.

Cette détermination est avantageusement réalisée facilement, sans nécessiter d'opérations contraignantes de calibration préalables, au moyen d'un équipement physiquement simple, peu onéreux et facile à intégrer à tous les types et configurations de réservoirs existants.

Contrairement par exemple à la méthode dite TPGT, le procédé selon l'invention peut en outre s'appliquer de manière fiable même lorsque la quantité d'ergols contenue dans le réservoir est importante. Il peut en particulier facilement s'adapter à tout niveau de remplissage du réservoir pour lequel le jaugeage présente un intérêt pour la mission.

Ainsi, en plaçant le capteur de température dans une zone du réservoir adaptée à la mission du satellite, à partir de l'estimation réalisée selon l'invention de l'instant où un niveau d'ergols liquides déterminé, correspondant à cette position du capteur de température, est atteint dans le réservoir, il est avantageusement possible d'évaluer facilement et de manière précise la masse d'ergols liquides disponible à l'issue de la phase de forte poussée, et la durée restante pour la mission du satellite à l'issue de cette phase, notamment en combinant les données obtenues par le procédé selon l'invention avec les données issues de la méthode dite de Dead Reckoning, d'estimation de la consommation des moyens de propulsion pendant la phase de forte poussée, et la durée de cette phase.

A cet effet, il peut par exemple être appliqué l'équation (1) suivante :

$$m_{BOL} = m_{TM} - \left(t_{finLAE} - t_{TM}\right) * \dot{m}_{LAE} \qquad (1)$$

dans laquelle :

   $m_{BOL}$ représente la masse d'ergols à l'issue de la phase de forte poussée (correspondant au début de la mission du satellite)

   $m_{TM}$ représente la masse d'ergols liquides déterminée au moyen du procédé selon l'invention

   $f_{finLAE}$ représente la durée de la phase de forte poussée

   $t_{TM}$ représente l'instant I où l'interface liquide - gaz dans le réservoir passe au niveau du capteur de température, déterminé par le procédé selon l'invention

   et $\dot{m}_{LAE}$ représente la variation théorique par unité de temps de la masse d'ergols liquides au cours de la phase de forte poussée.

Par le fait qu'il permet de jauger avec précision la quantité d'ergols liquides contenue dans le réservoir d'un satellite à l'issue du tir d'apogée, le procédé selon l'invention permet notamment avantageusement : de déterminer avec précision quelles sont les manœuvres encore possibles pour le satellite à l'issue de ce tir d'apogée ; de réduire le budget d'ergols embarqués, par diminution de la quantité d'ergols à embarquer pour pallier l'incertitude associée aux méthodes de jaugeage existantes et garantir la mission du satellite ; d'optimiser la durée de fonctionnement opérationnel du satellite ; d'améliorer la connaissance du point de chute dans le cas d'une rentrée contrôlée avec épuisement des ergols lors du dernier tir d'apogée ; etc.

Le procédé selon l'invention est également particulièrement adapté pour prendre en compte les évolutions de la réglementation internationale concernant l'obligation de désorbiter les satellites. En particulier, en ce qui concerne les satellites en orbite terrestre basse, le procédé selon l'invention permet de jauger avec une bonne précision le contenu du réservoir pendant et/ou à l'issue des premières phases de désorbitation.

Le procédé selon l'invention s'avère également particulièrement utile pour rallonger au maximum la durée de vie des satellites de mission interplanétaire ainsi que des satellites d'observation de la terre, qui ont prévu une réentrée contrôlée en fin de mission.

Par paroi thermiquement conductrice, on entend dans la présente description que la paroi périphérique du réservoir présente, au moins dans une zone donnée, une conductivité thermique au moins égale à 5 W.m$^{-1}$.K$^{-1}$.

Le procédé selon l'invention peut comporter une étape préalable de fixation de l'organe de chauffage (ou des organes de chauffage les cas échéant) et du/des capteur(s) de température sur la surface externe de la paroi du réservoir, dans une position adéquate pour les besoins de la mission. Autrement, il peut comprendre une étape visant à se procurer un véhicule spatial déjà ainsi équipé.

Préférentiellement, la phase d'acquisitions de mesures de la température de la paroi du réservoir par le capteur de température est initiée au moins une minute après le début de la phase de forte poussée par les moyens de propulsion du véhicule spatial. Un tel décalage permet avantageusement d'améliorer la précision et la fiabilité du procédé selon l'invention. En effet, en début de phase de forte poussée, il se produit dans le réservoir du véhicule spatial des phénomènes transitoires, dus notamment à des ballottements subis par le réservoir. Le temps après lequel de tels phénomènes transitoires disparaissent dépend de différents paramètres, notamment de la taille du réservoir. Il est du ressort de l'homme du métier de déterminer, en fonction de ces paramètres, le moment optimal pour débuter l'acquisition des mesures de température, pour optimiser la précision du procédé de jaugeage selon l'invention. Par exemple, l'acquisition des mesures de température peut être débutée après au moins 10 minutes d'accélération du véhicule spatial supérieure ou égale à 0,05 m/s$^2$.

Les acquisitions de mesures de la température de la paroi du réservoir par le capteur de température sont en outre de préférence réalisées à une fréquence d'acquisition suffisamment rapide pour pouvoir déterminer avec un haut degré de précision l'instant où l'interface liquide-gaz dans le réservoir passe dans le plan d'intérêt associé au capteur de température. Là encore, il est du ressort de l'homme du métier de déterminer cette fréquence d'acquisition optimale, en fonction des paramètres particuliers du véhicule spatial, et notamment des dimensions du réservoir et de la consommation des moyens de propulsion.

A titre d'exemple, les acquisitions de mesure de température peuvent être réalisées à une fréquence d'une mesure toutes les 5 secondes ou moins, par exemple à une fréquence d'une mesure toutes les 4 secondes.

Le procédé selon l'invention peut en outre répondre à l'une ou plusieurs des caractéristiques décrites ci-après, mises en œuvre isolément ou en chacune de leurs combinaisons techniquement opérantes.

Comme indiqué ci-avant, l'instant I où la température mesurée par le capteur de température change correspond à l'instant auquel, si on établit une courbe numérique représentant la température relevée par le capteur de température en fonction du temps, il se produit une rupture de pente sur cette courbe numérique. Autrement énoncé, cet instant I correspond à l'instant où la différence entre deux valeurs relevées successivement par le capteur de température, qui était sensiblement constante jusque là, varie brusquement de manière plus importante.

Dans des modes de mise en œuvre particuliers de l'invention, la détermination de l'instant I où la température mesurée par le capteur de température change est réalisée par détection de l'instant où se produit une rupture de pente sur une courbe numérique représentant la température relevée par le capteur de température en fonction du temps.

A cet effet, il peut être mis en œuvre toute méthode numérique classique en elle-même pour l'homme du métier, de détection de la rupture de pente sur une courbe. Cette méthode peut notamment consister en l'analyse de la dérivée de la température par rapport au temps, de manière connue de l'homme du métier.

Dans des modes de mise en œuvre particulièrement avantageux du procédé de jaugeage selon l'invention, dans le véhicule spatial, sont fixés, sur la surface externe de la paroi du réservoir, une pluralité de capteurs de température, chacun de ces capteurs de température étant disposé à proximité de l'organe de chauffage et dans un plan perpendiculaire à l'axe de poussée, dit plan d'intérêt associé audit capteur de température, dans lequel l'interface liquide-gaz dans le réservoir est susceptible de passer pendant une phase de forte poussée exercée par les moyens de propulsion selon l'axe de poussée. Le procédé comporte alors, pour au moins un des capteurs de température, de préférence pour plusieurs des capteurs de température et préférentiellement pour chacun des capteurs de température :

- la détermination de l'instant I où la température mesurée par le capteur de température change, correspondant à l'instant où se produit une rupture de pente sur une courbe numérique représentant la température relevée par ce capteur de température en fonction du temps, ce changement étant indicatif de la présence de l'interface liquide-gaz dans le plan d'intérêt associé audit capteur de température. Cette étape comprend notamment la commande à distance du véhicule spatial pour réaliser une série d'acquisitions instantanées de mesures de la température de la paroi du réservoir par le capteur de température, à une fréquence d'acquisition d'une mesure toutes les 30 secondes ou moins, de préférence d'une mesure toutes les 10 secondes ou moins, et par exemple d'une mesure toutes les 5 secondes ou moins ;

- et la détermination, à partir des données de géométrie du réservoir et de la position connue dudit capteur de température sur la paroi du réservoir, du volume d'ergols liquides présent dans le réservoir à l'instant I.

Dans des modes de mise en œuvre particuliers du procédé selon l'invention, dans le véhicule spatial, les capteurs de température sont alignés sur un axe, dit axe de mesure, qui ne s'inscrit pas dans un plan parallèle au plan de l'interface liquide - gaz dans le réservoir lors de la phase de forte poussée. L'axe de mesure est de préférence parallèle à l'axe de poussée.

Les capteurs de température sont en outre de préférence situés à équidistance de l'organe de chauffage, qui s'étend également quant à lui de préférence le long d'un axe parallèle à l'axe de poussée.

Préférentiellement, les capteurs de température et l'organe de chauffage sont disposés les uns par rapport aux autres de telle sorte que le chauffage de la paroi du réservoir par l'organe de chauffage soit ressenti de la même manière par l'ensemble des capteurs de température, dans des conditions identiques de présence ou absence de liquide dans le plan d'intérêt associé à chacun desdits capteurs.

Ainsi, préférentiellement, l'organe de chauffage présente une hauteur, mesurée selon un axe parallèle à l'axe de mesure, supérieure à la hauteur occupée par les capteurs de température le long de l'axe de mesure.

De préférence, la distance entre les capteurs de température adjacents le long de l'axe de mesure est en outre régulière, et la hauteur de l'organe de chauffage dépassant au-delà de chacun des capteurs de température d'extrémité est supérieure à cette distance, par exemple au moins 1,5 fois supérieure. Une telle caractéristique permet notamment avantageusement de s'affranchir de tout effet de bord au niveau des capteurs de température d'extrémité.

Dans des modes de mise en œuvre particuliers du procédé selon l'invention, dans le véhicule spatial, la distance entre deux capteurs de température adjacents le long de l'axe de mesure, mesurée selon un axe parallèle à l'axe de poussée, est comprise entre 10 et 50 mm, par exemple comprise entre 20 et 40 mm.

Dans une telle configuration mettant en œuvre une pluralité de capteurs de température, la détermination de l'instant I où la température mesurée par un des capteurs de température change peut être réalisée, comme exposé précédemment, par détection de l'instant où se produit une rupture de pente sur une courbe numérique représentant la température relevée par ledit capteur de température en fonction du temps.

Une telle méthode peut être appliquée, simultanément, pour plusieurs des capteurs de température. Elle est préférentiellement réalisée pour chacun des capteurs de température concernés par la mission, c'est-à-dire disposés au niveau d'une zone du réservoir au niveau de laquelle, au cours de la mission particulière, l'interface liquide-gaz dans le réservoir est susceptible de se trouver.

Dans des modes de mise en œuvre particuliers de l'invention, la détermination de l'instant I où la température mesurée par un premier des capteurs de température change est réalisée par :

- pour ledit premier capteur de température et pour un capteur de température disposé en amont dudit premier capteur de température suivant la direction de poussée exercée par les moyens de propulsion selon l'axe de poussée, de préférence adjacent audit premier capteur de température, commande à distance du véhicule spatial pour réaliser des acquisitions simultanées de mesures de la température de la paroi du réservoir, à une fréquence d'acquisition d'une mesure toutes les 30 secondes ou moins, de préférence d'une mesure toutes les 10 secondes ou moins, et par exemple d'une mesure toutes les 5 secondes ou moins,

- pour chaque paire d'acquisitions simultanées, détermination de la différence entre la température mesurée par ledit capteur de température en amont dudit premier capteur et la température mesurée par ledit premier capteur,

- et détermination de l'instant auquel cette différence est maximale.

Cet instant correspond à l'instant I auquel l'interface liquide-gaz dans le réservoir est située dans le plan d'intérêt associé audit premier capteur. Il correspond également à l'instant où, sur une courbe numérique représentant la température relevée par le capteur de température en fonction du temps, il se produit une rupture de pente.

Un tel mode de mise en œuvre du procédé selon l'invention permet d'obtenir un jaugeage du réservoir particulièrement fiable et précis.

En particulier, il a été constaté par les présents inventeurs que lors du chauffage de la paroi du réservoir par l'organe de chauffage, il se forme, au niveau de la paroi du réservoir, une zone froide juste en-dessous de la surface libre de liquide, alors que la zone située au-dessus de cette surface libre devient de plus en plus chaude avec le temps. La différence de température entre le premier capteur de température, et le capteur de température disposé en amont dudit premier capteur, est ainsi maximale lorsque la surface libre de liquide se trouve juste au-dessus du premier capteur. Ensuite, alors que le niveau de liquide continue à baisser dans le réservoir, la température du premier capteur de température augmente plus rapidement que celle du capteur de température situé en amont de ce dernier.

Dans le véhicule spatial mis en œuvre selon l'invention, l'organe de chauffage peut être de tout type classique en lui-même pour l'homme du métier. Il est de préférence du type à résistance électrique, et peut notamment présenter une puissance comprise entre 1 et 10 W. Il est alimenté par une source d'alimentation électrique disposée dans le véhicule spatial.

Dans des modes de mise en œuvre particuliers du procédé selon l'invention, dans le véhicule spatial, deux organes de chauffage sont fixés sur la surface externe de la paroi du réservoir, de part et d'autre du ou des capteurs de température et à égale distance du ou des capteurs de température. Le deuxième organe de chauffage est de préférence sensiblement identique au premier organe de chauffage, et disposé de manière sensiblement similaire par rapport aux capteurs de température.

L'activation de l'organe de chauffage, pour le chauffage de la paroi du réservoir, par commande à distance du véhicule spatial, peut être réalisée aussi bien avant qu'après le début de la phase de forte poussée.

Dans le véhicule spatial mis en œuvre selon l'invention, les capteurs de température peuvent également être de tout type classique en lui-même. Ils peuvent par exemple consister en des thermistances ou des thermocouples.

Selon l'invention, dans le véhicule spatial, la distance entre le capteur de température et l'organe de chauffage peut être choisie de manière différente en fonction des caractéristiques du matériel mis en œuvre, notamment de la conductivité thermique de la paroi du réservoir, de la puissance de l'organe de chauffage, et de la sensibilité du capteur de température. Il entre dans les compétences de l'homme du métier de déterminer la distance optimale en fonction de ces caractéristiques, par exemple par simulations numériques. A titre d'exemple, cette distance peut être comprise entre 2 et 30 mm.

En fonction de l'accélération subie par le véhicule spatial, la surface de liquide dans le réservoir peut adopter une forme courbe, dite de ménisque.

Dans l'expression « détermination de l'instant I où la température mesurée par ledit capteur de température change, un tel changement étant indicatif de la présence dans le plan d'intérêt de l'interface liquide-gaz dans le réservoir », on inclut selon la présente invention les cas où le changement de température mesurée par le capteur de température est indicatif de la présence, dans le plan d'intérêt, d'un bord du ménisque situé au niveau de la paroi du réservoir. Il entre dans les compétences de l'homme du métier de déterminer, en fonction des conditions opératoires particulières, notamment de l'accélération subie par le véhicule spatial, des données de géométrie connues du réservoir, et de la viscosité des ergols liquides qui y sont contenus, par exemple par des simulations numériques permettant de déterminer le volume correspondant à la différence de hauteur de liquide due à la présence du ménisque, le volume réel d'ergols liquides contenu dans le réservoir à l'instant I.

La commande à distance du véhicule spatial peut être réalisée par un dispositif de commande, en particulier au sol, des signaux de commande étant successivement déterminés et envoyés au véhicule spatial par le dispositif de commande pour la réalisation des étapes de chauffage de la paroi du réservoir par le ou les organe(s) de chauffage et d'acquisitions de mesures de la température de la paroi du réservoir par le ou les capteur(s) de température.

Un autre aspect de l'invention concerne ainsi un dispositif de commande qui comporte des moyens configurés pour commander, de préférence à distance, notamment depuis la surface terrestre, un véhicule spatial tel que décrit ci-avant, par transmission de signaux de commande successifs audit véhicule spatial, pour réaliser les étapes du procédé selon l'invention de jaugeage du réservoir à ergols liquide dudit véhicule spatial, qui sont mises en œuvre au niveau de ce dernier.

Ce dispositif de commande, notamment de commande depuis le sol, est classique en lui-même et peut comporter une ou plusieurs antennes pour émettre des signaux d'instructions en direction du véhicule spatial, et pour recevoir des signaux de ce dernier. Il peut comprendre des ordinateurs et moyens de traitement et de stockage des données reçues du véhicule spatial. Ce dernier est notamment de préférence équipé d'un module de commande, comportant notamment un ou plusieurs processeurs, asservi à un module de communication coopérant avec le dispositif de commande.

Le/les organe(s) de chauffage et le/les capteur(s) de température sont en outre reliés à des récepteurs appartenant à la télémétrie du véhicule spatial, de sorte à leur transmettre des signaux de commande reçus du dispositif de commande à distance.

Par ailleurs, dans le procédé selon l'invention de jaugeage du réservoir à ergols liquide d'un véhicule spatial, le traitement des mesures relevées par les capteurs de température est préférentiellement effectué depuis une station distante, par exemple au sol. A cet effet, les capteurs de température peuvent être connectés à un émetteur appartenant à la télémétrie du véhicule spatial, qui est apte à envoyer un signal de télémétrie à un récepteur, situé dans la station distante. Ce récepteur appartient de préférence au dispositif de commande décrit ci-avant. Il est relié à des moyens de calcul permettant de réaliser le traitement des données de température transmises par l'émetteur.

Autrement, le traitement des mesures peut se faire à bord du véhicule spatial, qui est alors pourvu de moyens de calcul adaptés à cet effet. Dans une telle configuration, le procédé de jaugeage selon l'invention comprend une étape de commande à distance, notamment depuis le sol, de ces moyens de calcul, pour la réalisation des étapes du procédé selon l'invention, de détermination de l'instant I où la température mesurée par le capteur de température change, et, le cas échéant, la détermination, à partir des données de géométrie du réservoir et de la position connue du capteur de température sur la paroi du réservoir, du volume d'ergols liquides présent dans le réservoir à l'instant I.

Selon un autre aspect, la présente invention concerne un véhicule spatial, équipé de moyens pour la mise en œuvre d'un procédé selon l'invention.

Ce véhicule spatial comporte :

- un réservoir à ergols comportant une paroi périphérique thermiquement conductrice et étant de géométrie connue, contenant un volume d'ergols liquides,

- des moyens de propulsion aptes à exercer, selon un axe de poussée donné, une forte poussée, c'est-à-dire, comme exposé ci-avant, une poussée permettant d'obtenir une accélération du véhicule spatial supérieure ou égale à 0,05 m/s$^2$, et alimentés en ergols liquides depuis ledit réservoir à ergols,

- et un organe de chauffage fixé contre la surface externe de la paroi du réservoir.

Le véhicule spatial selon l'invention comporte en outre au moins deux capteurs de température fixés contre la surface externe de la paroi du réservoir, à proximité de l'organe de chauffage, ces capteurs de température étant alignés sur un axe parallèle à l'axe de poussée, et étant chacun disposé dans un plan perpendiculaire à l'axe de poussée, dit plan d'intérêt associé audit capteur de température, dans lequel l'interface liquide-gaz dans le réservoir est susceptible de passer pendant une phase de forte poussée exercée par les moyens de propulsion du véhicule spatial selon l'axe de poussée.

L'organe de chauffage et les capteurs de température peuvent répondre à l'une ou plusieurs des caractéristiques énoncées ci-avant en référence au procédé de jaugeage, tant en ce qui concerne leurs caractéristiques propres, que leurs caractéristiques de disposition les uns par rapport aux autres contre la paroi du réservoir. Ils forment avantageusement ensemble un système compact et facile à positionner contre la paroi du réservoir du véhicule spatial.

Ainsi, dans des modes de réalisation particuliers de l'invention, les capteurs de température sont situés à équidistance de l'organe de chauffage.

L'organe de chauffage présente de préférence une hauteur, mesurée selon un axe parallèle à l'axe de poussée, supérieure à la hauteur occupée par les capteurs de température le long de l'axe de mesure.

Préférentiellement, la distance entre les capteurs de température adjacents disposés le long de l'axe de mesure est régulière, et la hauteur de l'organe de chauffage dépassant au-delà de chacun des capteurs de température d'extrémité est supérieure à cette distance.

La distance entre deux capteurs de température adjacents disposés le long de l'axe de mesure peut notamment être comprise entre 10 et 50 mm, par exemple entre 20 et 40 mm.

Dans des modes de réalisation particuliers de l'invention, deux organes de chauffage sont fixés sur la surface externe de la paroi du réservoir, de part et d'autre des capteurs de température et à égale distance des capteurs de température. Le deuxième organe de chauffage est de préférence sensiblement identique au premier organe de chauffage, et disposé de manière similaire par rapport aux capteurs de température.

Dans des modes de réalisation particuliers de l'invention, le véhicule spatial comporte en outre des moyens de télémétrie aptes à transmettre les valeurs de température relevées par les capteurs de température à un récepteur distant. Ces moyens de télémétrie sont d'un type classique en lui-même pour l'homme du métier.

Il comporte également un ou plusieurs récepteurs pour recevoir des signaux de commande, en provenance notamment d'un dispositif de commande à distance, pour la réalisation des étapes du procédé de jaugeage selon l'invention mises en œuvre dans le véhicule spatial.

Selon un autre aspect, l'invention concerne un système pour le jaugeage du réservoir à ergols d'un véhicule spatial selon l'invention, ce véhicule spatial répondant à l'une ou plusieurs des caractéristiques exposées ci-avant ou ci-après. Ce système de jaugeage comporte :

- ledit véhicule spatial,

- le cas échéant, un dispositif de commande à distance du véhicule spatial pour la réalisation des étapes du procédé de jaugeage selon l'invention mises en œuvre à bord du véhicule spatial,

- et des moyens de calcul pour déterminer, à partir des valeurs de température relevées par au moins un des capteurs de température, l'instant I où l'interface liquide-gaz dans le réservoir se trouve dans le plan d'intérêt associé au capteur de température, et le volume d'ergols liquides présent dans le réservoir associé.

Dans des modes de réalisation particuliers de l'invention, le véhicule spatial comporte des moyens de télémétrie aptes à transmettre les valeurs de température relevées par les capteurs de température à un récepteur distant. Le système de jaugeage comporte en outre un récepteur apte à recevoir les valeurs de température transmises par les moyens de télémétrie du véhicule spatial, et à les transférer aux moyens de calcul.

Les moyens de télémétrie, le récepteur et les moyens de calcul sont classiques en eux-mêmes.

Les moyens de calcul peuvent comprendre des moyens de traitement et de stockage des données reçues du véhicule spatial. Ils peuvent par exemple comprendre au moins un processeur et au moins une mémoire électronique dans laquelle est mémorisé un produit programme d'ordinateur, sous la forme d'un ensemble d'instructions de code de programme à exécuter pour mettre en œuvre les différentes étapes de calcul du procédé de jaugeage selon l'invention. Dans une variante de l'invention, les moyens de calcul comportent également un ou des circuits logiques programmables, de type FPGA, PLD, etc., et/ou circuits intégrés spécialisés (ASIC) adaptés à mettre en œuvre tout ou partie desdites étapes de calcul du procédé de jaugeage selon l'invention. En d'autres termes, les moyens de calcul comportent un ensemble de moyens configurés de façon logicielle (produit programme d'ordinateur spécifique) et/ou matérielle (FPGA, PLD, ASIC, etc.) pour mettre en œuvre les différentes étapes de calcul du procédé de jaugeage selon l'invention.

De manière générale, selon un autre aspect, la présente invention concerne un produit programme d'ordinateur, qui comporte un ensemble d'instructions de code de programme qui, lorsqu'elles sont exécutées par un processeur, mettent en œuvre l'ensemble des étapes d'un procédé de jaugeage du réservoir à ergols liquides d'un véhicule spatial selon l'invention.

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 7, dans lesquelles :

- la figure 1 représente de manière schématique le réservoir à ergols d'un véhicule spatial équipé d'un organe de chauffage et d'un ensemble de capteurs de température pour la mise en œuvre d'un procédé de jaugeage selon l'invention ;

- la figure 2 montre un ensemble d'organes de chauffage et de capteurs de température, équipant le réservoir à ergols d'un véhicule spatial pour la mise en œuvre d'un procédé de jaugeage selon l'invention ;

- la figure 3 montre un graphe illustrant l'évolution en fonction du temps de la température relevée par un capteur de température de la figure 2, lors de la mise en œuvre d'un procédé de jaugeage selon l'invention ;

- la figure 4 montre un graphe illustrant l'évolution en fonction du temps des températures relevées par l'ensemble des capteurs de température de la figure 2, lors de la mise en œuvre d'un procédé de jaugeage selon l'invention au cours d'un tir d'apogée ;

- la figure 5 montre un graphe illustrant l'évolution en fonction du temps des températures relevées par deux capteurs de température adjacents de la figure 2, ainsi que de la différence entre les températures relevées par ces deux capteurs, lors de la mise en œuvre d'un procédé de jaugeage selon l'invention ;

- la figure 6 montre un agrandissement du détail A de la figure 1, illustrant la forme de ménisque de la surface de liquide dans le réservoir :

- et la figure 7 représente un graphe illustrant l'évolution en fonction du temps d'une part de la température relevée par un capteur de température de la figure 2, et d'autre part de la dérivée de la température mesurée par rapport au temps (moyenne mobile de 5 valeurs), lors de la mise en œuvre d'un procédé de jaugeage selon l'invention.

On notera dès à présent que les dessins ne sont pas à l'échelle, certains éléments et certaines distances ayant été volontairement grossis afin de faciliter la compréhension de l'invention.

Le procédé de jaugeage du réservoir à ergols d'un véhicule spatial tel qu'un satellite, ce réservoir contenant un volume d'ergols liquides, est destiné à être mis en œuvre pour un véhicule spatial équipé de moyens de propulsion aptes à exercer une forte poussée selon un axe de poussée donné 12, c'est-à-dire de sorte à appliquer au véhicule spatial une accélération supérieure ou égale à 0,05 m/s$^2$. Typiquement, une telle poussée est mise en œuvre lors des tirs d'apogée, visant à amener le satellite de télécommunication depuis son orbite d'injection par le lanceur jusqu'à son orbite de mission géostationnaire.

Les moyens de propulsion du véhicule spatial peuvent être de tout type classique en lui-même, fonctionnant par consommation de carburant liquide.

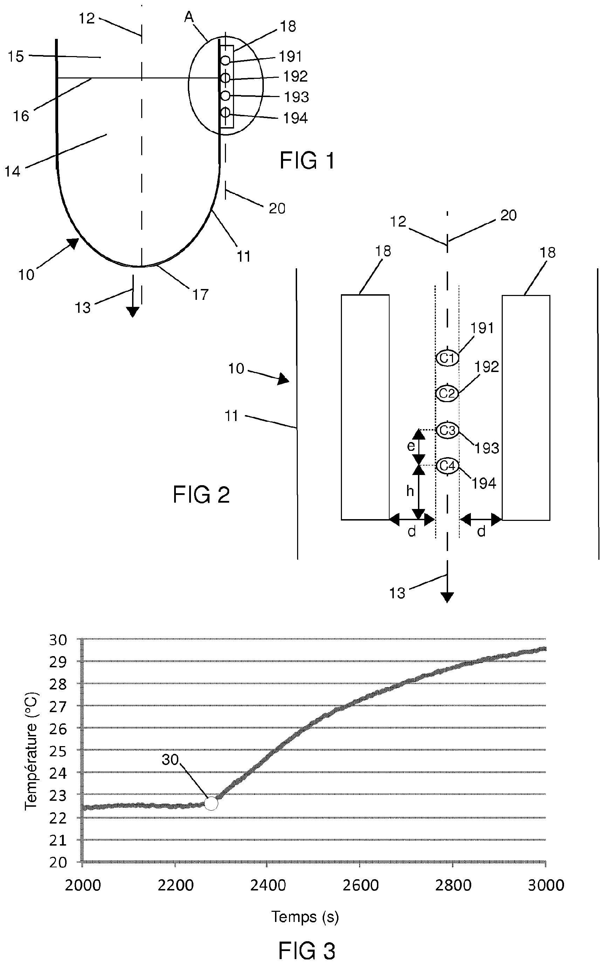

Un exemple de réservoir 10 d'un véhicule spatial auquel s'applique la présente invention est montré sur la figure 1. Ce réservoir est délimité extérieurement par une paroi 11 formée en un matériau thermiquement conducteur, par exemple en titane ou en aluminium, présentant de préférence une conductivité thermique supérieure ou égale à 5 W.m$^{-1}$.K$^{-1}$. Par exemple, la paroi 11 peut présenter une épaisseur de 1 mm, avec une conductivité thermique de 5 W.m$^{-1}$.K$^{-1}$.

Le réservoir 10 est de géométrie connue, cette géométrie n'étant bien entendu nullement limitée à la forme particulière illustrée sur la figure 1.

Sur la figure 1, on a représenté l'axe de poussée 12. La forte poussée exercée par les moyens de propulsion du véhicule spatial s'exerce selon cet axe 12, selon la direction indiquée en 13 sur la figure.

Le réservoir 10 contient un volume d'ergols liquides 14, ainsi qu'un volume de gaz 15.

Lors d'une phase de forte poussée exercée par les moyens de propulsion du satellite selon l'axe de poussée 12, et selon la direction 13, consommant des ergols liquides, le volume d'ergols liquides 14 est plaqué vers le fond 17 du réservoir. L'interface liquide-gaz 16 dans le réservoir 10 est plane et sensiblement perpendiculaire à l'axe de poussée 12, ici perpendiculaire au plan de la figure 1, et elle se déplace sensiblement perpendiculairement à l'axe de poussée 12, et selon la direction 13, en direction du fond 17 du réservoir. Au cours de ce déplacement, l'interface liquide-gaz 16 se trouve ainsi successivement dans une pluralité de plans perpendiculaires à l'axe de poussée 12.

Le procédé selon l'invention met en œuvre au moins un organe de chauffage 18 qui est fixé contre la surface externe de la paroi 11 du réservoir, de sorte à être apte à chauffer cette paroi 11. Cet organe de chauffage 18 peut être de tout type classique en lui-même, notamment de type à résistance électrique. Il présente préférentiellement une puissance comprise entre 1 et 10W.

L'organe de chauffage 18 est de préférence fixé contre la paroi 11 du réservoir 10 de sorte à s'étendre sur une certaine hauteur de cette dernière, cette hauteur étant mesurée parallèlement à l'axe de poussée 12, et de sorte à couvrir une pluralité des plans dans lesquels l'interface liquide-gaz 16 dans le réservoir 10 est susceptible de passer au cours d'une phase de fonctionnement du véhicule spatial dans laquelle les moyens de propulsion exercent une forte poussée, par exemple au cours d'un tir d'apogée.

L'organe de chauffage 18 est associé à au moins un capteur de température 191, par exemple une thermistance, qui est lui aussi fixé contre la surface externe de la paroi 11 du réservoir 10, à proximité de l'organe de chauffage 18. Dans le mode de réalisation illustré sur la figure 1, une pluralité de tels capteurs de température, plus précisément quatre capteurs de température 191, 192, 193, 194 (un tel nombre n'étant nullement limitatif de l'invention), sont ainsi associés à l'organe de chauffage 18. Ces capteurs de température 191, 192, 193, 194 sont alignés le long d'un axe, dit axe de mesure 20. Cet axe de mesure est de préférence sensiblement parallèle à l'axe de poussée 12.

Chaque capteur de température 191, 192, 193, 194 est disposé suffisamment près de l'organe de chauffage pour être apte à mesurer une élévation de température de la paroi 11 du réservoir 10 provoquée par le chauffage de cette paroi 11 par l'organe de chauffage 18. Chaque capteur de température est en outre disposé dans un plan perpendiculaire à l'axe de poussée 12, dit plan d'intérêt associé au capteur de température, au niveau duquel l'interface liquide-gaz 16 dans le réservoir 10 est susceptible de se trouver momentanément au cours de la phase de forte poussée, lors de la diminution du volume d'ergols liquides 14 contenu dans le réservoir 10.

A partir des données de géométrie connues du réservoir 10, il est ainsi possible d'associer, par un calcul facile, à chaque capteur de température 191, 192, 193, 194, un volume de liquide correspondant au volume d'ergols liquides 14 restant dans le réservoir 10 lorsque la surface libre de liquide, c'est-à-dire l'interface liquide-gaz 16, passe dans le plan d'intérêt associé au capteur de température.

Ce volume peut facilement être converti en masse d'ergols liquides restant dans le réservoir 10, à partir de la masse volumique connue des ergols liquides mis en œuvre.

La figure 2 montre un exemple de disposition des différents éléments fixés sur la paroi 11 du réservoir 10, pour la mise en œuvre d'un procédé de jaugeage selon l'invention, en vue de face. Ainsi, sur cette figure, la paroi 11 du réservoir 10 s'étend dans le plan de la figure.

Dans cet exemple de réalisation, sont mis en œuvre deux organes de chauffage 18, pouvant être identiques ou différents l'un de l'autre, et s'étendant de préférence sensiblement parallèlement l'un à l'autre, préférentiellement selon un axe sensiblement parallèle à l'axe de poussée 12.

Entre les deux organes de chauffage 18 sont disposés quatre capteurs de température dénommés successivement C1, C2, C3 et C4, respectivement référencés 191, 192, 193, 194, en partant du capteur de température le plus éloigné du fond 17 du réservoir 10, vers le capteur de température le plus proche de ce fond 17. Ces capteurs de température peuvent être identiques ou différents les uns des autres.

Les capteurs de température 191, 192, 193, 194 sont tous situés à égale distance de chaque organe de chauffage 18. Cette distance, notée d, est par exemple égale à 5 mm.

Les capteurs de température 191, 192, 193, 194 sont alignés selon un axe 20, dit axe de mesure, ne s'inscrivant pas dans un plan parallèle au plan de l'interface liquide-gaz dans le réservoir 10 lors d'une phase de forte poussée exercée par les moyens de propulsion du véhicule spatial selon l'axe de poussée 12. De préférence, l'axe de mesure 20 est sensiblement parallèle à l'axe de poussée 12. Dans la représentation particulière de la figure 2, l'axe de poussée 12 et l'axe de mesure 20 sont superposés l'un à l'autre.

La distance entre deux capteurs de température 191, 192, 193, 194 adjacents le long de l'axe de mesure 20, mesurée selon l'axe de poussée 12, notée e, est préférentiellement régulière, et de préférence comprise entre 10 et 50 mm. Elle est par exemple égale à 25 mm.

La hauteur de chaque organe de chauffage 18, mesurée selon l'axe de mesure 20, dépassant au-delà de chacun des capteurs de température d'extrémité 191, 194, notée h, est de préférence supérieure à la distance e entre deux capteurs de température 191, 192, 193, 194 adjacents, en particulier 1,5 fois supérieure. On s'affranchit ainsi avantageusement des effets de bords pouvant se produire au niveau des capteurs de température d'extrémité 191, 194. A titre d'exemple, la hauteur des organes de chauffage 18 dépassant au-delà de chacun des capteurs de température d'extrémité 191, 194 peut être égale à 37,5 mm.

Ces différents éléments peuvent être disposés dans toute zone du réservoir 10 pertinente en fonction des besoins de la mission du véhicule spatial. Ils peuvent par exemple être disposés près de la membrane équipant de manière classique le réservoir 10.

Selon un exemple de mise en œuvre particulier, le procédé de jaugeage du réservoir 10 selon l'invention, utilisant les éléments décrits en référence à la figure 2, procède comme suit.

Dans toute la description ci-après, les résultats chiffrés sont donnés pour la configuration opératoire suivante : la distance e entre deux capteurs de température adjacents est de 25 mm ; l'organe de chauffage dépasse au-delà des capteurs de température d'extrémité 191, 194 d'une hauteur h de 37,5 cm ; la distance d entre les capteurs de température 191, 192, 193, 194 et les organes de chauffage 18 est égale à 5 mm. Chaque organe de chauffage 18 présente une puissance de 1,5 W.

Pendant un tir d'apogée, c'est-à-dire une phase de forte poussée exercée selon l'axe de poussée 12 par les moyens de propulsion du véhicule spatial, plus précisément, pour les exemples chiffrés ci-après, une phase de poussée permettant d'imprimer au véhicule spatial une accélération de 0,117 m/s$^2$, créant un régime gravitaire dans le réservoir, cette phase ayant une durée de 2 818 s, la paroi 11 du réservoir 10 est chauffée par les organes de chauffage 18.

L'activation des organes de chauffage 18 peut aussi bien avoir eu lieu avant la mise en œuvre de la phase de forte poussée, que pendant cette phase.

La réalisation de cette étape, tout comme celle des autres étapes mises en œuvre dans le véhicule spatial, dont un exemple de réalisation sera décrit ci-après, est commandée à distance, par un dispositif de commande situé à distance, par exemple sur la surface terrestre.

Ce dispositif de commande à distance est configuré pour piloter les différentes étapes du procédé mises en œuvre par le véhicule spatial. A cet effet, le dispositif de commande et le véhicule spatial comportent chacun des moyens conventionnels de communication à distance.

Le dispositif de commande est adapté à déterminer des signaux de commande qui sont envoyés au véhicule spatial. Ces signaux de commande sont par exemple déterminés en fonction de signaux de mesure reçus du véhicule spatial, qui sont déterminés par différents capteurs (gyroscope, senseur stellaire, etc.) de ce dernier.

Selon l'invention, il est ensuite procédé, pour au moins un des capteurs de température 191, 192, 193, 194, de préférence pour plusieurs, et préférentiellement pour tous ces capteurs de température, à une série d'acquisitions instantanées, à fréquence rapide, de la température de la paroi 11 du réservoir 10. Dans les exemples chiffrés ici présentés, les acquisitions sont réalisées à une fréquence d'une acquisition toutes les 4 secondes. Elles sont de préférence réalisées simultanément pour l'ensemble des capteurs de température 191, 192, 193, 194.

Les données relevées par les capteurs de température 191, 192, 193, 194 sont de préférence transmises, par les moyens de télémétrie du véhicule spatial, au dispositif de commande à distance, notamment situé sur la surface terrestre. Ce dispositif comporte de préférence des moyens de calcul configurés pour mettre en œuvre les différentes étapes de calcul du procédé de jaugeage selon l'invention.

Le dispositif de commande à distance comporte par exemple au moins un processeur et au moins une mémoire électronique dans laquelle est mémorisé un produit programme d'ordinateur, sous la forme d'un ensemble d'instructions de code de programme à exécuter pour mettre en œuvre les différentes étapes d'un procédé de jaugeage selon l'invention.

Dans une variante, le dispositif de commande comporte également un ou des circuits logiques programmables, de type FPGA, PLD, etc., et/ou circuits intégrés spécialisés (ASIC) adaptés à mettre en œuvre tout ou partie desdites étapes du procédé de jaugeage. En d'autres termes, le dispositif de commande comporte un ensemble de moyens configurés de façon logicielle (produit programme d'ordinateur spécifique) et/ou matérielle (FPGA, PLD, ASIC, etc.) pour mettre en œuvre les différentes étapes d'un procédé de jaugeage du réservoir à ergols liquides d'un véhicule spatial selon l'invention.

Au cours de la phase de forte poussée, une quantité importante d'ergols liquides est consommée par les moyens de propulsion, si bien que le volume d'ergols liquides 14 dans le réservoir diminue rapidement. Comme exposé ci-avant, les ergols liquides sont plaqués vers le fond 17 du réservoir 10, et la surface libre du liquide 16 est plane, et sensiblement perpendiculaire à l'axe de poussée 12.

Pour chaque capteur de température, au moment où l'interface liquide-gaz 16 se trouve dans le plan d'intérêt associé au capteur, il se produit une brusque élévation de la température mesurée. L'inertie thermique de la paroi 11 du réservoir 10 est en effet différente selon que du liquide est ou non en contact avec cette paroi 11.

Sur une courbe numérique représentant la température relevée par le capteur de température en fonction du temps, telle que montrée sur la figure 3, par exemple pour le capteur de température C1 191, il se produit une rupture de pente, indiquée par le rond référencé en 30 sur la figure.

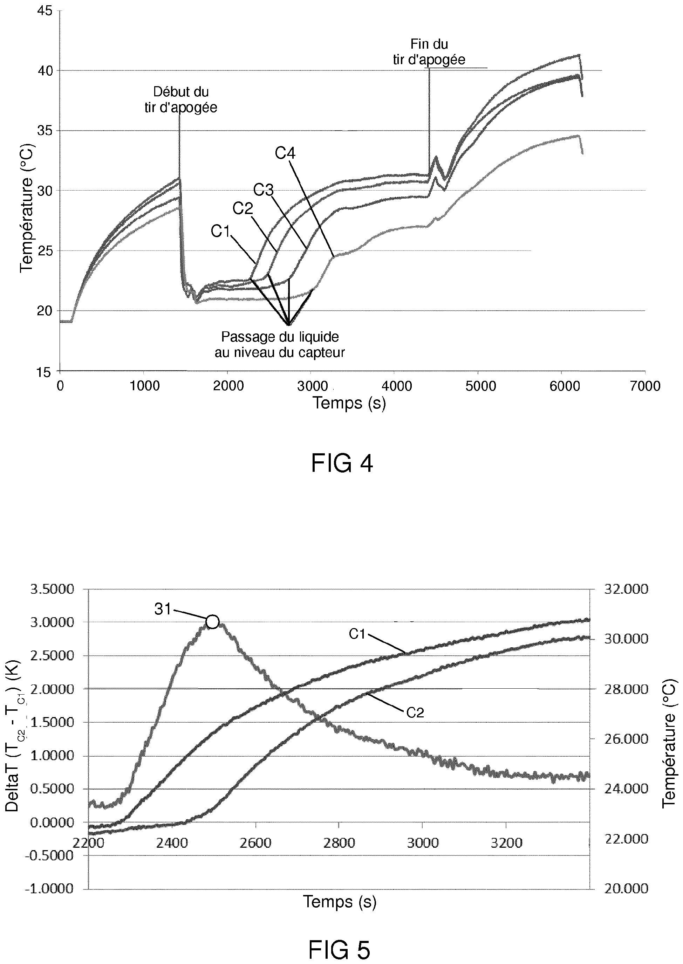

La figure 4 montre un graphe illustrant l'évolution en fonction du temps de la température relevée par chacun des capteurs de température C1 191, C2 192, C3 193 et C4 194.

Sur ce graphe, sont indiqués le début du tir d'apogée, et la fin du tir d'apogée. Les organes de chauffage 18 sont opérants pendant toute la durée du tir d'apogée. Ils ont été activés avant le début du tir.

Comme on peut le voir sur les courbes, au moment du début du tir d'apogée, la température de la paroi 11 du réservoir située au niveau des capteurs de température chute brusquement. Les ergols liquides ont en effet été plaqués en direction du fond 17 du réservoir 10, et occupent entièrement la partie du réservoir au niveau de laquelle sont situés les capteurs de température. L'inertie thermique de la paroi 11 à cet endroit est de ce fait importante. Au cours du tir d'apogée, on observe une rupture de pente successivement sur chacune des courbes. Chaque rupture de pente indique l'instant où l'interface liquide-gaz 16 dans le réservoir 10 s'est trouvée dans le plan d'intérêt associé à un capteur de température 191, 192, 193, 194. En toute logique, cette interface s'est trouvée tout d'abord au niveau du plan d'intérêt associé au capteur de température C1 191 le plus éloigné du fond 17 du réservoir 10, puis au niveau du plan d'intérêt associé au capteur de température C2 192 immédiatement adjacent, ensuite au niveau du plan d'intérêt associé au capteur de température C3 193 suivant, et enfin au niveau du plan d'intérêt associé au capteur de température C4 194 le plus proche du fond 17 du réservoir 10.

Le procédé de jaugeage selon l'invention comprend une étape de détermination de l'instant où la température relevée par un des capteurs de température 191, 192, 193, 194 change.

Cet instant peut être déterminé par analyse de la différence entre les températures relevées par deux capteurs de température associés à des plans d'intérêt distincts, ce qui permet avantageusement d'obtenir un résultat particulièrement fiable et précis. Plus particulièrement, l'instant où change la température relevée par un capteur de température, par exemple le capteur C2 192, peut être déterminé par analyse de la différence entre la température relevée par ce capteur C2 192 et la température relevée par un capteur de température situé en amont suivant la direction de poussée 13, c'est-à-dire un capteur de température plus éloigné du fond 17 du réservoir 10 que le capteur de température C2 192, qui lui est de préférence adjacent. Dans le mode de réalisation particulier illustré sur les figures, il s'agit du capteur adjacent C1 191. En effet, au niveau de la paroi 11 du réservoir 10, il se forme une zone froide juste au-dessous de l'interface liquide-gaz 16, et une zone chaude, et qui devient de plus en plus chaude avec le temps, au-dessus de cette interface.

La figure 5 montre un graphe représentant, en fonction du temps, l'évolution de la température relevée par le capteur de température C1 191, de la température relevée par le capteur de température C2 192, et de la différence entre ces deux températures. L'instant où cette différence est maximale, qui est illustré par un rond référencé en 31 sur la figure, correspond à l'instant où l'inertie thermique de la paroi 11 du réservoir 10 commence à changer au niveau du capteur de température C2 192, ce qui signifie que l'interface liquide-gaz 16 dans le réservoir 10 se trouve au niveau de ce capteur. Ensuite, la différence de température se met à décroître, les deux capteurs se trouvent tous deux au niveau d'une zone de la paroi 11 sur réservoir 10 qui n'est plus en contact avec du liquide.

Ainsi, en étudiant la différence de températures relevées par deux capteurs de température distincts, il est avantageusement possible de déterminer de manière précise l'instant I où l'interface liquide-gaz 16 dans le réservoir passe au niveau du plan d'intérêt associé au capteur de température qui est, parmi ces deux capteurs de température, le plus proche du fond 17 du réservoir 10.

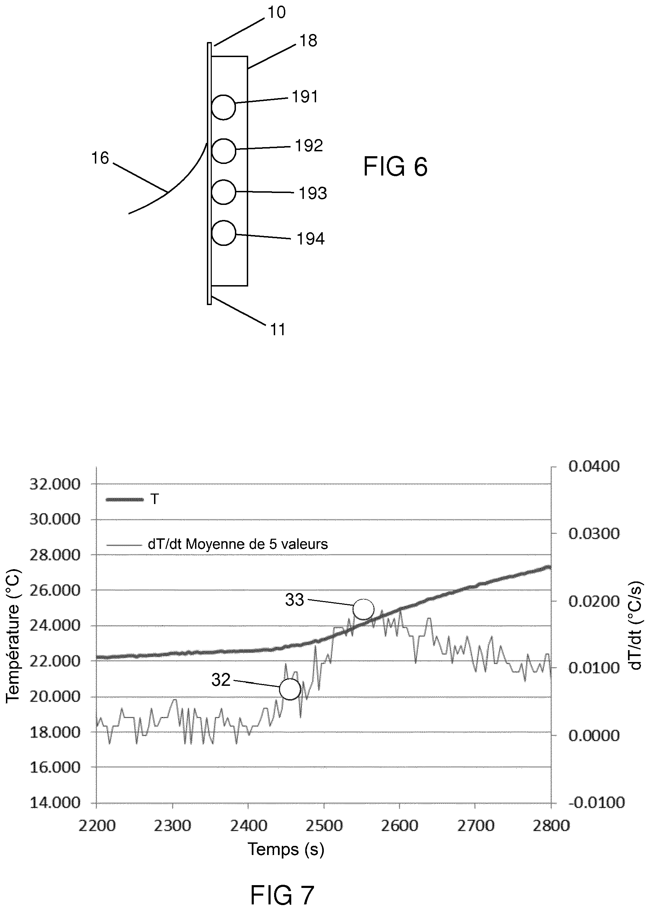

En fonction de l'accélération à laquelle est soumis le véhicule spatial, l'interface liquide-gaz 16 dans le réservoir 10 peut adopter une forme courbe, dite de ménisque, le niveau de liquide étant plus élevé contre la paroi 11 du réservoir 10, qu'au centre de ce dernier. Cette forme de ménisque est classiquement d'autant plus marquée que l'accélération du véhicule spatial est faible. Cette forme de ménisque est illustrée sur la figure 6, qui montre un agrandissement du détail A de la figure 1.

Le changement d'inertie thermique de la paroi du réacteur ne se produit pas exactement au niveau de la surface libre de liquide, mais légèrement plus haut, au niveau du bord périphérique du ménisque

Il entre dans les compétences de l'homme du métier de déterminer, en fonction des conditions particulières, la hauteur de ce ménisque, et d'apporter, en fonction de cette hauteur, le correctif adéquat au volume d'ergols réellement contenu dans le réservoir à l'instant I déterminé conformément à l'invention, pour améliorer la précision du procédé de jaugeage selon l'invention.

L'instant où la température relevée par un des capteurs de température 191, 192, 193, 194 change, indicatif de la présence de l'interface liquide-gaz 16 dans le réservoir 10 au niveau du plan d'intérêt associé audit capteur de température, peut autrement être déterminé par détection de la rupture de pente sur la courbe numérique représentant la température relevée par le capteur de température en fonction du temps. Cette détection peut être effectuée selon toute méthode classique en elle-même pour un homme du métier. Par exemple, elle peut être réalisée par analyse de la dérivée de la température par rapport au temps. A titre d'exemple, il est montré sur la figure 7 un graphe représentant l'évolution en fonction du temps d'une part de la température relevée par le capteur de température C2 192, et d'autre part de la dérivée de la température par rapport au temps.

Sur la courbe de la dérivée, il est indiqué par un rond référencé en 32 l'instant où l'inertie thermique de la paroi 11 du réservoir 10, au niveau du capteur de température 192, commence à décroître. Ceci correspond à la présence du bord extérieur du ménisque au niveau du capteur de température. Il est en outre indiqué, par un rond référencé en 33, l'instant où l'inertie thermique de la paroi 11 du réservoir 10, au niveau du capteur de température 192, atteint sa valeur minimale. La surface libre de liquide 16 dans le réservoir 10 et la quasi-totalité du ménisque se trouvent alors sous le plan d'intérêt associé au capteur de température.

Comme indiqué ci-avant, à partir de la connaissance obtenue par le procédé selon l'invention de l'instant I auquel l'interface liquide-gaz 16 dans le réservoir 10 se trouve dans le plan d'intérêt associé à un capteur de température, par exemple le capteur de température C2 192, le volume d'ergols liquides correspondant peut être facilement déterminé, à partir des données géométriques relatives au réservoir 10, et à la position connue du capteur de température sur ce réservoir 10, dans une étape suivante du procédé de jaugeage selon l'invention.

On peut alors facilement en déduire une masse d'ergols correspondante.

A titre d'exemple, le procédé selon l'invention a été appliqué dans les conditions opératoires indiquées ci-avant, avec le matériel ci-après.

Le réservoir 10 est de forme cylindro-sphérique, d'un rayon de 343 mm. L'ensemble organe(s) de chauffage - capteur(s) de température est disposé à 55 mm du bas de la partie cylindrique.

L'ergol analysé est du NTO (pour l'anglais « Nitrogen Tetra Oxide »).

Dans les conditions de poussée appliquée, la hauteur du ménisque est de 1,26 cm.

Les résultats obtenus au moyen du procédé selon l'invention ont été utilisés pour déterminer une masse d'ergols restant dans le réservoir du véhicule spatial à l'issue du tir d'apogée, en combinant ces résultats avec les données de la méthode de Dead Reckoning, selon l'équation (1) :

$$m_{BOL} = m_{TM} - \left( t_{finLAE} - t_{TM} \right) * \dot{m}_{LAE} \qquad (1)$$

dans laquelle les différents paramètres sont tels que définis ci-avant.

Les résultats obtenus ont été comparés aux prédictions obtenues par la méthode du Dead Reckoning (DR). La différence entre : les données obtenues grâce au procédé selon l'invention pour chacun des capteurs de température C1, C2, C3 et C4, par d'une part la méthode d'analyse de la dérivée de la température par rapport au temps, décrite ci-avant, et d'autre part la méthode de détermination de l'instant où est maximale la différence entre les températures relevées par des capteurs de température distincts, également décrite ci-avant, puis application de l'équation (1) ci-avant; et les données issues des prédictions de Dead Reckoning (masse restante de référence (DR)), a été calculée.

Les résultats obtenus sont montrés dans le tableau 1 ci-dessous.

Tableau 1 - Comparaison des données de masse obtenues par mise en œuvre de procédés selon des modes de mise en œuvre particuliers de l'invention et des données de prédiction par Dead Reckoning (DR)

| Capteur | Masse restante de référence (DR) (kg) | Détermination par la méthode de la dérivée | | Détermination par la méthode de la différence | |
|---|---|---|---|---|---|
| | | Masse (kg) | Différence par rapport à DR (kg) | Masse (kg) | Différence par rapport à DR (kg) |
| C4 | 338,132 | 337,929 | -0,203 | 337,032 | -1,100 |
| C3 | 351,381 | 350,72 | -0,661 | 350,541 | -0,840 |
| C2 | 364,629 | 363,511 | -1,118 | 362,613 | -2,016 |
| C1 | 377,879 | 372,531 | -5,348 | - | - |

On observe que les résultats obtenus sont très proches quelle que soit la méthode selon l'invention utilisée (dérivée ou différence).

Ainsi, en combinant le jaugeage du réservoir par le procédé selon l'invention, et la méthode du Dead Reckoning, on améliore grandement la connaissance de la quantité d'ergols restant à la fin du tir d'apogée. Le procédé selon l'invention permet de ce fait avantageusement d'affiner les prédictions réalisées par la méthode classique de Dead Reckoning, quant à la masse d'ergols liquides restant dans le réservoir à l'issue du tir d'apogée, donc au début de la mission proprement dite du véhicule spatial.

**Revendications**

1. Procédé de jaugeage du réservoir à ergols liquides (10) d'un véhicule spatial, ledit réservoir à ergols (10) comportant une paroi (11) thermiquement conductrice, étant de géométrie connue et contenant un volume d'ergols liquides (14), et ledit véhicule spatial étant équipé de moyens de propulsion aptes à exercer, selon un axe de poussée donné (12), une forte poussée permettant d'obtenir une accélération dudit véhicule spatial supérieure ou égale à 0,05 m/s$^2$, ledit procédé étant **caractérisé en ce qu'**il comprend des étapes de :

- pendant une phase de forte poussée selon ledit axe de poussée (12) exercée par lesdits moyens de propulsion alimentés en ergols liquides depuis ledit réservoir à ergols (10), commande à distance dudit véhicule spatial dans lequel sont fixés, sur la surface externe de ladite paroi (11) du réservoir (10), un organe de chauffage (18) et au moins un capteur de température (191) dans une position connue à proximité dudit organe de chauffage (18), ledit capteur de température (191) étant disposé dans un plan perpendiculaire audit axe de poussée (12), dit plan d'intérêt, dans lequel l'interface liquide-gaz (16) dans ledit réservoir (10) est susceptible de passer pendant une phase de forte poussée exercée par lesdits moyens de propulsion selon ledit axe de poussée (12), pour la mise en œuvre d'étapes de :

  ◦ chauffage de la paroi (11) du réservoir (10) par l'organe de chauffage (18) ;
  ◦ et acquisitions de mesures de la température de la paroi (11) du réservoir (10) par ledit capteur de température (191), à raison d'une mesure toutes les 30 secondes ou moins ;

- détermination de l'instant I où la température mesurée par ledit capteur de température (191) change, correspondant à l'instant où se produit une rupture de pente sur une courbe numérique représentant la température relevée par ledit capteur de température (191) en fonction du temps, un tel changement étant indicatif de la présence dans le plan d'intérêt de l'interface liquide-gaz (16) dans le réservoir (10) ;
- et détermination, à partir des données de géométrie du réservoir (10) et de la position connue du capteur de température (191) sur la paroi (11) du réservoir (10), du volume d'ergols liquides (14) présent dans ledit réservoir (10) à l'instant I.

2. Procédé selon la revendication 1, selon lequel la détermination de l'instant I où la température mesurée par ledit capteur de température (191) change est réalisée par détection de l'instant où se produit une rupture de pente sur une courbe numérique représentant la température relevée par ledit capteur de température en fonction du temps.

3. Procédé selon l'une quelconque des revendications 1 à 2, selon lequel, dans ledit véhicule spatial, sont fixés, sur la surface externe de la paroi (11) du réservoir (10), une pluralité de capteurs de température (191, 192, 193, 194), chacun desdits capteurs de température (191, 192, 193, 194) étant disposé à proximité de l'organe de chauffage (18) et dans un plan perpendiculaire audit axe de poussée (12), dit plan d'intérêt associé audit capteur de température, dans lequel l'interface liquide-gaz (16) dans ledit réservoir (10) est susceptible de passer pendant une phase de forte poussée exercée par lesdits moyens de propulsion selon ledit axe de poussée (12),
ledit procédé comportant, pour au moins un desdits capteurs de température (191, 192, 193, 194), de préférence pour plusieurs desdits capteurs de température et préférentiellement pour chacun desdits capteurs de température :

  - la détermination de l'instant I où la température mesurée par ledit capteur de température (191, 192, 193, 194) change, correspondant à l'instant où se produit une rupture de pente sur une courbe numérique représentant la température relevée par ledit capteur de température (191, 192, 193, 194) en fonction du temps, ledit changement étant indicatif de la présence de l'interface liquide-gaz (16) dans le plan d'intérêt associé audit capteur de température (191, 192, 193, 194) ;
  - et la détermination, à partir des données de géométrie du réservoir (10) et de la position connue du capteur de température (191, 192, 193, 194) sur la paroi (11) du réservoir (10), du volume d'ergols liquides (14) présent dans ledit réservoir (10) à l'instant I.

4. Procédé selon la revendication 3, selon lequel, dans ledit véhicule spatial, lesdits capteurs de température (191, 192, 193, 194) sont situés à équidistance dudit organe de chauffage (18).

5. Procédé selon la revendication 4, selon lequel, dans ledit véhicule spatial, lesdits capteurs de température (191, 192, 193, 194) sont alignés sur un axe, dit axe de mesure (20), et l'organe de chauffage (18) présente une hauteur, mesurée selon ledit axe de mesure (20), supérieure à la hauteur occupée par lesdits capteurs de température (191, 192, 193, 194) le long dudit axe de mesure (20).

6. Procédé selon la revendication 5, selon lequel, dans ledit véhicule spatial, la distance entre les capteurs de température (191, 192, 193, 194) adjacents le long dudit axe de mesure (20) est régulière, et la hauteur de l'organe de chauffage (18) dépassant au-delà de chacun des capteurs de température d'extrémité (191, 194) est supérieure à ladite distance.

7. Procédé selon l'une quelconque des revendications 4 à 6, selon lequel, dans ledit véhicule spatial, la distance entre deux capteurs de température (191, 192, 193, 194) adjacents le long dudit axe de mesure (20), mesurée selon un axe parallèle à l'axe de poussée (12), est comprise entre 10 et 50 mm.

8. Procédé selon l'une quelconque des revendications 4 à 7, selon lequel la détermination de l'instant I où la température mesurée par un premier desdits capteurs de température (192) change est réalisée par :

- pour ledit premier capteur de température (192) et un capteur de température (191) disposé en amont dudit premier capteur de température (192) suivant la direction de poussée (13) exercée par les moyens de propulsion selon l'axe de poussée (12), commande à distance dudit véhicule spatial pour réaliser des acquisitions simultanées de mesures de la température de la paroi (11) du réservoir (10), à raison d'une mesure toutes les 30 secondes ou moins,
- pour chaque paire d'acquisitions simultanées, détermination de la différence entre la température mesurée par ledit capteur de température en amont (191) et la température mesurée par ledit premier capteur de température (192),
- et détermination de l'instant auquel ladite différence est maximale.

9. Procédé selon l'une quelconque des revendications 3 à 8, selon lequel, dans ledit véhicule spatial, lesdits capteurs de température (191, 192, 193, 194) sont alignés sur un axe, dit axe de mesure (20), parallèle audit axe de poussée (12).

10. Procédé selon l'une quelconque des revendications 1 à 9, selon lequel, dans ledit véhicule spatial, deux organes de chauffage (18) sont fixés sur la surface externe de la paroi (11) du réservoir (10), de part et d'autre dudit capteur de température (191, 192, 193, 194) et à égale distance dudit capteur de température (191, 192, 193, 194).

11. Procédé selon l'une quelconque des revendications 1 à 10, selon lequel la commande à distance dudit véhicule spatial est réalisée par un dispositif de commande, des signaux de commande étant successivement déterminés et envoyés audit véhicule spatial par le dispositif de commande pour la réalisation des étapes de chauffage de la paroi (11) du réservoir (10) par l'organe de chauffage (18) et d'acquisitions de mesures de la température de la paroi (11) du réservoir (10) par ledit capteur de température (191, 192, 193, 194).

12. Produit programme d'ordinateur **caractérisé en ce qu'**il comporte un ensemble d'instructions de code de programme qui, lorsqu'elles sont exécutées par un processeur, mettent en œuvre les étapes d'un procédé de jaugeage du réservoir à ergols liquides (10) d'un véhicule spatial selon l'une quelconque des revendications 1 à 11.

13. Véhicule spatial comportant :

- un réservoir à ergols (10) comportant une paroi (11) thermiquement conductrice et étant de géométrie connue, contenant un volume d'ergols liquides (14),
- des moyens de propulsion aptes à exercer, selon un axe de poussée donné (12), une forte poussée permettant d'obtenir une accélération dudit véhicule spatial supérieure ou égale à 0,05 m/s$^2$, et alimentés en ergols liquides depuis ledit réservoir à ergols (10),
- et un organe de chauffage (18) fixé contre la surface externe de ladite paroi (11) du réservoir (10),

**caractérisé en ce qu'**il comporte au moins deux capteurs de température (191, 192, 193, 194) fixés contre ladite surface externe à proximité dudit organe de chauffage (18), lesdits capteurs de température (191, 192, 193, 194) étant alignés sur un axe dit axe de mesure (20) parallèle audit axe de poussée (12), et étant chacun disposé dans un plan perpendiculaire audit axe de poussée (12), dit plan d'intérêt associé audit capteur de température, dans lequel l'interface liquide-gaz (16) dans ledit réservoir (10) est susceptible de passer pendant une phase de forte poussée exercée par lesdits moyens de propulsion selon ledit axe de poussée (12).

14. Véhicule spatial selon la revendication 13, dans lequel lesdits capteurs de température (191, 192, 193, 194) sont situés à équidistance dudit organe de chauffage (18).

15. Véhicule spatial selon l'une quelconque des revendications 13 à 14, dans lequel l'organe de chauffage (18) présente une hauteur, mesurée selon un axe parallèle audit axe de poussée (12), supérieure à la hauteur occupée par lesdits capteurs de température (191, 192, 193, 194) le long dudit axe de mesure (20).

16. Véhicule spatial selon l'une quelconque des revendications 13 à 15, dans lequel deux organes de chauffage (18) sont fixés sur la surface externe de la paroi (11) du réservoir (10), de part et d'autre desdits capteurs de température (191, 192, 193, 194) et à égale distance desdits capteurs de température (191, 192, 193, 194).

17. Véhicule spatial selon l'une quelconque des revendications 13 à 16, comportant des moyens de télémétrie aptes à transmettre les valeurs de température relevées par lesdits capteurs de température (191, 192, 193, 194) à un récepteur distant.

18. Système comportant :

- ledit véhicule spatial selon l'une quelconque des revendications 13 à 17,
- et des moyens de calcul pour déterminer, à partir des valeurs de température relevées par au moins un desdits capteurs de température (191, 192, 193, 194), l'instant I où l'interface liquide-gaz (16) dans le réservoir (10) se trouve dans le plan d'intérêt associé audit capteur de température, et le volume d'ergols liquides (14) présent dans le réservoir (10) associé.

19. Système selon la revendication 18, dans lequel :

- le véhicule spatial comporte des moyens de télémétrie aptes à transmettre les valeurs de température relevées par lesdits capteurs de température (191, 192, 193, 194) à un récepteur distant,
- et le système comporte un récepteur apte à recevoir les valeurs de température transmises par lesdits moyens de télémétrie du véhicule spatial, et à les transférer auxdits moyens de calcul.


**Patentansprüche**

1. Verfahren zur Messung des Tanks für flüssige Treibstoffe (10) eines Raumfahrzeugs, wobei der Treibstofftank (10) eine thermisch leitende Wand (11) aufweist, bekannter Geometrie ist und ein Volumen flüssiger Treibstoffe (14) enthält, und das Raumfahrzeug mit Antriebsmitteln ausgestattet ist, die imstande sind, gemäß einer bestimmten Schubachse (12) einen starken Schub auszuüben, der erlaubt, eine Beschleunigung des Raumfahrzeugs zu erhalten, die größer als oder gleich 0,05 m/s$^2$ ist, wobei das Verfahren **dadurch gekennzeichnet ist, dass** es die Schritte umfasst:

- während einer Phase starken Schubs gemäß der Schubachse (12), ausgeführt von den mit flüssigen Treibstoffen aus dem Treibstofftank (10) versorgten Antriebsmitteln, Fernsteuern des Raumfahrzeugs, wobei auf der Außenfläche der Wand (11) des Tanks (10) ein Heizorgan (18) und mindestens ein Temperatursensor (191) in einer bekannten Position in der Nähe des Heizorgans (18) befestigt sind, wobei der Temperatursensor (191) in einer Ebene senkrecht zur Schubachse (12), bezeichnet als interessierende Ebene, angeordnet ist, in welche die Flüssigkeit-Gas-Schnittstelle (16) im Tank (10) während einer Phase starken Schubs, ausgeführt von den Antriebsmitteln gemäß der Schubachse (12), zur Durchführung der Schritte in der Lage ist zu gelangen:

  o Erwärmen der Wand (11) des Tanks (10) durch das Heizorgan (18);
  o und Erfassen von Messungen der Temperatur der Wand (11) des Tanks (10) durch den Temperatursensor (191) in der Anzahl einer Messung alle 30 Sekunden oder weniger;

- Bestimmen des Zeitpunkts I, zu dem sich die von dem Temperatursensor (191) gemessene Temperatur ändert, der dem Zeitpunkt entspricht, zu dem ein Gefällebruch auf einer digitalen Kurve erfolgt, welche die von dem Temperatursensor (191) in Abhängigkeit von der Zeit ermittelte Temperatur darstellt, wobei eine derartige Veränderung ein Hinweis für die Anwesenheit in der interessierenden Ebene der Flüssigkeit-Gas-Schnittstelle (16) im Tank (10) ist;
- und Bestimmen, auf der Basis der Geometriedaten des Tanks (10) und der bekannten Position des Temperatursensors (191) auf der Wand (11) des Tanks (10), des im Tank (10) zum Zeitpunkt I vorhandenen Volumens flüssiger Treibstoffe (14).

2. Verfahren nach Anspruch 1, wobei das Bestimmen des Zeitpunkts I, zu dem sich die von dem Temperatursensor (191) gemessene Temperatur ändert, durch Feststellen des Zeitpunkts durchgeführt wird, zu dem ein Gefällebruch auf einer digitalen Kurve erfolgt, welche die von dem Temperatursensor in Abhängigkeit von der Zeit ermittelte Temperatur darstellt.

3. Verfahren nach einem der Ansprüche 1 bis 2, wobei im Raumfahrzeug auf der Außenfläche der Wand (11) des Tanks (10) eine Vielzahl von Temperatursensoren (191, 192, 193, 194) befestigt sind, wobei jeder der Temperatursensoren (191, 192, 193, 194) in der Nähe des Heizorgans (18) und in einer Ebene senkrecht zur Schubachse (12), bezeichnet als interessierende Ebene, angeordnet ist, die dem Temperatursensor zugeordnet ist, in welche die Flüssigkeit-Gas-Schnittstelle (16) im Tank (10) während einer Phase starken Schubs, ausgeführt von den Antriebsmitteln gemäß der Schubachse (12), in der Lage ist zu gelangen,
wobei das Verfahren für mindestens einen der Temperatursensoren (191, 192, 193, 194), vorzugsweise für mehrere der Temperatursensoren und in bevorzugter Weise für jeden der Temperatursensoren aufweist:

- das Bestimmen des Zeitpunkts I, zu dem sich die von dem Temperatursensor (191, 192, 193, 194) gemessene Temperatur ändert, der dem Zeitpunkt entspricht, zu dem ein Gefällebruch auf einer digitalen Kurve erfolgt, welche die von dem Temperatursensor (191, 192, 193, 194) in Abhängigkeit von der Zeit ermittelte Temperatur darstellt, wobei die Veränderung ein Hinweis für die Anwesenheit der Flüssigkeit-Gas-Schnittstelle (16) in der interessierenden Ebene ist, die dem Temperatursensor (191, 192, 193, 194) zugeordnet ist;
- und das Bestimmen, auf der Basis der Geometriedaten des Tanks (10) und der bekannten Position des Temperatursensors (191, 192, 193, 194) auf der Wand (11) des Tanks (10), des im Tank (10) zum Zeitpunkt I vorhandenen Volumens flüssiger Treibstoffe (14).

4. Verfahren nach Anspruch 3, wobei sich die Temperatursensoren (191, 192, 193, 194) im Raumfahrzeug gleichmäßig beabstandet vom Heizorgan (18) befinden.

5. Verfahren nach Anspruch 4, wobei im Raumfahrzeug die Temperatursensoren (191, 192, 193, 194) auf einer Achse, bezeichnet als Messachse (20), aufgereiht sind, und das Heizorgan (18) eine Höhe aufweist, gemessen gemäß der Messachse (20), die höher ist als die von den Temperatursensoren (191, 192, 193, 194) entlang der Messachse (20) belegte Höhe.

6. Verfahren nach Anspruch 5, wobei im Raumfahrzeug der Abstand zwischen den benachbarten Temperatursensoren (191, 192, 193, 194) entlang der Messachse (20) gleichmäßig ist und die Höhe des Heizorgans (18), die über jeden der Endtemperatursensoren (191, 194) hinausreicht, größer als der Abstand ist.

7. Verfahren nach einem der Ansprüche 4 bis 6, wobei im Raumfahrzeug der Abstand zwischen zwei benachbarten Temperatursensoren (191, 192, 193, 194) entlang der Messachse (20), gemessen gemäß einer zur Schubachse (12) parallelen Achse, zwischen 10 und 50 mm liegt.

8. Verfahren nach einem der Ansprüche 4 bis 7, wobei das Bestimmen des Zeitpunkts I, zu dem sich die von einem ersten der Temperatursensoren (192) gemessene Temperatur ändert, durchgeführt wird durch:

- für den ersten Temperatursensor (192) und einen Temperatursensor (191), der gemäß der von den Antriebsmitteln gemäß der Schubachse (12) ausgeübten Schubrichtung (13) dem ersten Temperatursensor (192) vorgelagert angeordnet ist, Fernsteuern des Raumfahrzeugs, um gleichzeitige Erfassungen von Messungen der Temperatur der Wand (11) des Tanks (10) in der Anzahl einer Messung alle 30 Sekunden oder weniger,
- für jedes Paar gleichzeitiger Erfassungen, Bestimmen der Differenz zwischen der von dem vorgelagerten Temperatursensor (191) gemessenen Temperatur und der von dem ersten Temperatursensor (192) gemessenen Temperatur,
- und Bestimmen des Zeitpunkts, zu dem die Differenz maximal ist.

9. Verfahren nach einem der Ansprüche 3 bis 8, wobei im Raumfahrzeug die Temperatursensoren (191, 192, 193, 194) auf einer Achse, bezeichnet als Messachse (20), aufgereiht sind, die parallel zur Schubachse (12) ist.

10. Verfahren nach einem der Ansprüche 1 bis 9, wobei im Raumfahrzeug zwei Heizorgane (18) auf der Außenfläche der Wand (11) des Tanks (10) beiderseits des Temperatursensors (191, 192, 193, 194) und mit gleichem Abstand von dem Temperatursensor (191, 192, 193, 194) befestigt sind.

11. Verfahren nach einem der Ansprüche 1 bis 10, wobei die Fernsteuerung des Raumfahrzeugs von einer Steuervorrichtung durchgeführt wird, wobei Steuersignale nacheinander bestimmt und von der Steuervorrichtung für die Durchführung der Heizschritte der Wand (11) des Tanks (10) durch das Heizorgan (18) und Erfassungen von Messungen der Temperatur der Wand (11) des Tanks (10) durch den Temperatursensor (191, 192, 193, 194) an das Raumfahrzeug geschickt werden.

**12.** Rechnerprogrammprodukt, **dadurch gekennzeichnet, dass** es eine Gruppe von Programmcodebefehlen aufweist, die, wenn sie von einem Prozessor ausgeführt werden, die Schritte eines Verfahrens zur Messung des Tanks flüssiger Treibstoffe (10) eines Raumfahrzeugs nach einem der Ansprüche 1 bis 11 durchführen.

**13.** Raumfahrzeug, aufweisend:

- einen Treibstofftank (10), der eine thermisch leitende Wand (11) aufweist und bekannter Geometrie ist, enthaltend ein Volumen flüssiger Treibstoffe (14),
- Antriebsmittel, die imstande sind, gemäß einer bestimmten Schubachse (12) einen starken Schub auszuüben, der erlaubt, eine Beschleunigung des Raumfahrzeugs zu erreichen, die größer als oder gleich 0,05 m/s$^2$ ist, und ab dem Treibstofftank (10) mit flüssigen Treibstoffen versorgt werden,
- und ein Heizorgan (18), das auf der Außenfläche der Wand (11) des Tanks (10) befestigt ist,

**dadurch gekennzeichnet, dass** es mindestens zwei Temperatursensoren (191, 192, 193, 194) aufweist, die auf der Außenfläche in der Nähe des Heizorgans (18) befestigt sind, wobei die Temperatursensoren (191, 192, 193, 194) auf einer als Messachse (20) bezeichneten Achse ausgerichtet sind, die parallel zur Schubachse (12) ist, und jeweils in einer Ebene senkrecht zur Schubachse (12), bezeichnet als interessierende Ebene, angeordnet ist, die dem Temperatursensor zugeordnet ist, in welche die Flüssigkeit-Gas-Schnittstelle (16) im Tank (10) während einer Phase starken Schubs, ausgeführt von den Antriebsmitteln gemäß der Schubachse (12), in der Lage ist zu gelangen.

**14.** Raumfahrzeug nach Anspruch 13, wobei sich die Temperatursensoren (191, 192, 193, 194) gleichmäßig vom Heizorgan (18) beabstandet befinden.

**15.** Raumfahrzeugs nach einem der Ansprüche 13 bis 14, wobei das Heizorgan (18) eine Höhe aufweist, gemessen gemäß einer zur Schubachse (12) parallelen Achse, die größer als die Höhe ist, die von den Temperatursensoren (191, 192, 193, 194) entlang der Messachse (20) belegt wird.

**16.** Raumfahrzeug nach einem der Ansprüche 13 bis 15, wobei zwei Heizorgane (18) auf der Außenfläche der Wand (11) des Tanks (10) beiderseits der Temperatursensoren (191, 192, 193, 194) und mit gleichem Abstand von den Temperatursensoren (191, 192, 193, 194) befestigt sind.

**17.** Raumfahrzeug nach einem der Ansprüche 13 bis 16, aufweisend Telemetriemittel, die imstande sind, von den Temperatursensoren (191, 192, 193, 194) ermittelte Temperaturwerte an einen entfernten Empfänger zu übertragen.

**18.** System, aufweisend:

- das Raumfahrzeug nach einem der Ansprüche 13 bis 17,
- und Rechenmittel, um auf der Basis der von mindestens einem der Temperatursensoren (191, 192, 193, 194) ermittelten Temperaturwerte den Zeitpunkt I zu bestimmen, zu dem sich die Flüssigkeit-Gas-Schnittstelle (16) im Tank (10) in der interessierende Ebene befindet, die dem Temperatursensor zugeordnet ist, und das Volumen flüssiger Treibstoffe (14), das in dem zugeordneten Tank (10) vorhanden ist.

**19.** System nach Anspruch 18, wobei:

- das Raumfahrzeug Telemetriemittel aufweist, die imstande sind, von den Temperatursensoren (191, 192, 193, 194) ermittelte Temperaturwerte an einen entfernten Empfänger zu übertragen,
- und das System einen Empfänger aufweist, der imstande ist, die von den Telemetriemitteln des Raumfahrzeugs übermittelten Temperaturwerte zu empfangen und sie an die Rechenmittel weiterzuleiten.

**Claims**

**1.** Method for gauging the liquid propellant tank (10) of a spacecraft, said propellant tank (10) comprising a thermally-conductive wall (11), having a known geometry and containing a volume of liquid propellant (14), and said spacecraft being equipped with means of propulsion capable of exerting, according to a given thrust axis (12), a high thrust allowing said spacecraft to achieve an acceleration of greater than or equal to 0.05 m/s$^2$, said method being **characterised in that** it comprises steps of:

- during a phase of high-thrust along said thrust axis (12) exerted by said means of propulsion supplied with liquid propellant from said propellant tank (10), remotely controlling said spacecraft in which are attached, on the outer surface of said wall (11) of the tank (10), a heating member (18) and at least one temperature sensor (191) in a known position in proximity to said heating member (18), said temperature sensor (191) being arranged in a plane perpendicular to said thrust axis (12), referred to as plane of interest, in which the liquid-gas interface (16) in said tank (10) is likely to be located at some time during a phase of high-thrust exerted by said means of propulsion along said thrust axis (12), in order to implement steps of:

○ heating the wall (11) of the tank (10) using the heating member (18);
○ and acquiring measurements of the temperature of the wall (11) of the tank (10) using said temperature sensor (191), at a rate of one measurement every 30 seconds or less;

- determining the moment I at which the temperature measured by said temperature sensor (191) changes, which corresponds to the moment at which a break of slope occurs on a digital curve representing the temperature recorded by said temperature sensor (191) as a function of time, such a change indicating the presence in the plane of interest of the liquid-gas interface (16) in the tank (10);
- and determining, from the geometrical data of the tank (10) and the known position of the temperature sensor (191) on the wall (11) of the tank (10), the volume of liquid propellant (14) present in said tank (10) at the moment I.

2. Method according to claim 1, wherein determining the moment I at which the temperature measured by said temperature sensor (191) changes is carried out by detecting the moment at which a break of slope occurs on a digital curve representing the temperature recorded by said temperature sensor as a function of time.

3. Method according to either claim 1 or claim 2, wherein, in said spacecraft, a plurality of temperature sensors (191, 192, 193, 194) are attached on the outer surface of the wall (11) of the tank (10), each of said temperature sensors (191, 192, 193, 194) being arranged in proximity to the heating member (18) and in a plane perpendicular to said thrust axis (12), referred to as the plane of interest associated with said temperature sensor, in which the liquid-gas interface (16) in said tank (10) is likely to be located at some time during a phase of high-thrust exerted by said means of propulsion along said thrust axis (12),

said method comprising, for at least one of said temperature sensors (191, 192, 193, 194), preferably for a plurality of said temperature sensors and more preferably for each of said temperature sensors, steps of:

- determining the moment I at which the temperature measured by said temperature sensor (191, 192, 193, 194) changes, which corresponds to the moment at which a break of slope occurs on a digital curve representing the temperature recorded by said temperature sensor (191, 192, 193, 194) as a function of time, said change indicating the presence of the liquid-gas interface (16) in the plane of interest associated with said temperature sensor (191, 192, 193, 194);
- and determining, from the geometrical data of the tank (10) and the known position of the temperature sensor (191, 192, 193, 194) on the wall (11) of the tank (10), the volume of liquid propellant (14) present in said tank (10) at the moment I.

4. Method according to claim 3, wherein, in said spacecraft, said temperature sensors (191, 192, 193, 194) are situated at an equal distance from said heating member (18).

5. Method according to claim 4, wherein, in said spacecraft, said temperature sensors (191, 192, 193, 194) are aligned along a so-called measurement axis (20), and the heating member (18) has a height, measured along said measurement axis (20), that is greater than the height occupied by said temperature sensors (191, 192, 193, 194) along said measurement axis (20).

6. Method according to claim 5, wherein, in said spacecraft, the distance between the adjacent temperature sensors (191, 192, 193, 194) arranged along said measurement axis (20) is even, and the height of the heating member (18) protruding beyond each of the end temperature sensors (191, 194) is greater than said distance.

7. Method according to any of claims 4 to 6, wherein, in said spacecraft, the distance between two adjacent temperature sensors (191, 192, 193, 194) along said measurement axis (20), measured according to an axis parallel to the thrust axis (12), is between 10 and 50 mm.

8. Method according to any of claims 4 to 7, wherein determining the moment I at which the temperature measured by a first of said temperature sensors (192) changes is carried out by:

- for said first temperature sensor (192) and for a temperature sensor (191) arranged upstream of said first temperature sensor (192) in the direction of the thrust (13) exerted by the means of propulsion along the thrust axis (12), remotely controlling said spacecraft in order to carry out simultaneous acquisitions of measurements of the temperature of the wall (11) of the tank (10), at a rate of one measurement every 30 seconds or less,
- for each pair of simultaneous acquisitions, determining the difference between the temperature measured by said upstream temperature sensor (191) and the temperature measured by said first temperature sensor (192),
- and determining the moment at which said difference is the highest.

9. Method according to any of claims 3 to 8, wherein, in said spacecraft, said temperature sensors (191, 192, 193, 194) are aligned along a so-called measurement axis (20), parallel to said thrust axis (12).

10. Method according to any of claims 1 to 9, wherein, in said spacecraft, two heating members (18) are attached on the outer surface of the wall (11) of the tank (10), on either side of said temperature sensor (191, 192, 193, 194) and at an equal distance from said temperature sensor (191, 192, 193, 194).

11. Method according to any of claims 1 to 10, wherein said spacecraft is remotely controlled by a control device, whereby control signals are successively determined and sent to said spacecraft by the control device in order to carry out the steps of heating the wall (11) of the tank (10) using the heating member (18) and of acquiring measurements of the temperature of the wall (11) of the tank (10) using said temperature sensor (191, 192, 193, 194).

12. Computer program product, **characterised in that** it comprises a set of program code instructions which, when executed by a processor, implement the steps of a method for gauging the liquid propellant tank (10) of a spacecraft according to any of claims 1 to 11.

13. Spacecraft comprising:

- a propellant tank (10) comprising a thermally-conductive wall (11) and having a known geometry, containing a volume of liquid propellant (14),
- means of propulsion capable of exerting, according to a given thrust axis (12), a high thrust allowing said spacecraft to achieve an acceleration of greater than or equal to 0.05 m/s$^2$, and supplied with liquid propellant from said propellant tank (10),
- and a heating member (18) attached on the outer surface of said wall (11) of the tank (10),

**characterised in that** it comprises at least two temperature sensors (191, 192, 193, 194) attached on said outer surface in proximity to said heating member (18), said temperature sensors (191, 192, 193, 194) being aligned along a so-called measurement axis (20) parallel to said thrust axis (12), and each being arranged in a plane perpendicular to said thrust axis (12), referred to as the plane of interest associated with said temperature sensor, in which the liquid-gas interface (16) in said tank (10) is likely to be located at some time during a phase of high-thrust exerted by said means of propulsion along said thrust axis (12).

14. Spacecraft according to claim 13, wherein said temperature sensors (191, 192, 193, 194) are situated at an equal distance from said heating member (18).

15. Spacecraft according to either claim 13 or claim 14, wherein the heating member (18) has a height, measured along an axis parallel to said thrust axis (12), that is greater than the height occupied by said temperature sensors (191, 192, 193, 194) along said measurement axis (20).

16. Spacecraft according to any of claims 13 to 15, wherein two heating members (18) are attached to the outer surface of the wall (11) of the tank (10), on either side of said temperature sensors (191, 192, 193, 194) and at an equal distance from said temperature sensors (191, 192, 193, 194).

17. Spacecraft according to any of claims 13 to 16, comprising telemetry means suitable for transmitting the temperature values recorded by said temperature sensors (191, 192, 193, 194) to a remote receiver.

18. System comprising:

- said spacecraft according to any of claims 13 to 17,
- and computing means for determining, from the temperature values recorded by at least one of said temperature sensors (191, 192, 193, 194), the moment I at which the liquid-gas interface (16) in the tank (10) is located in the plane of interest associated with said temperature sensor, and the volume of liquid propellant (14) present in the associated tank (10).

19. System according to claim 18, wherein:

- the spacecraft comprises telemetry means suitable for transmitting the temperature values recorded by said temperature sensors (191, 192, 193, 194) to a remote receiver,
- and the system comprises a receiver capable of receiving the temperature values transmitted by said telemetry means of the spacecraft, and of transferring them to said computing means.

FIG 1

FIG 2

FIG 3

FIG 4

FIG 5

FIG 6

FIG 7

**EP 3 485 238 B1**

## RÉFÉRENCES CITÉES DANS LA DESCRIPTION

**Documents brevets cités dans la description**

- US 5209115 A
- US 20090234596 A
- EP 2103863 A
- FR 2735227 A1